# DEMANDE DE BREVET EUROPEEN

(11) **EP 1 093 985 A1**
(43) Date de publication de la demande: **25.04.2001**
(21) Numéro de dépôt: 00402836.1
(22) Date de dépôt: 13.10.2000
(51) Int. Cl.: B60T 1/00, F16H 63/48, F16H 63/34, F16H 61/22

(54) **Dispositif de frein de parking pour véhicule automobile équipé d'une boite de vitesses automatique, et véhicule automobile équipé d'un tel dispositif**

(30) Priorité: 19.10.1999 FR 9913027
(71) Demandeur: Renault, 92100 Boulogne Billancourt (FR)
(72) Inventeur: Sellos, Gérard, 78420 Carrieres sur Seine (FR)

(57) **Abrégé**

Ce dispositif de frein de parking pour véhicule automobile (5) équipé d'une boîte de vitesses automatique est remarquable en ce qu'il comprend des moyens (25, 31, 33) pour interdire son actionnement tant que ledit véhicule automobile (5) n'est pas arrêté.

## Description

De manière connue, les véhicules automobiles équipés d'une boîte de vitesses automatique disposent d'un système couramment appelé « frein de parking », permettant, lorsqu'on place le levier de vitesses dans une position dite « de parking », de bloquer les roues motrices et ainsi d'assurer l'immobilisation complète du véhicule.

Dans ces systèmes, on peut placer le levier de vitesses en position de parking et bloquer ainsi les roues motrices même lorsque le véhicule automobile est encore en train de rouler.

Un tel blocage des roues motrices est très dangereux, car il risque de conduire à des dérapages et à une perte de contrôle du véhicule automobile, notamment lorsque celui-ci se déplace à grande vitesse.

En outre, un tel blocage risque de conduire à une détérioration importante de la boîte de vitesses automatique, voire du moteur (thermique et/ou électrique) du véhicule automobile, même si celui-ci se déplace à faible vitesse.

La présente invention a pour but de fournir un système de frein de parking qui permette de s'affranchir des risques susmentionnés.

On atteint ce but de l'invention avec un dispositif de frein de parking pour véhicule automobile équipé d'une boîte de vitesses automatique, remarquable en ce qu'il comprend des moyens pour interdire son actionnement tant que ledit véhicule automobile n'est pas arrêté.

Grâce à ces caractéristiques, il devient impossible de bloquer les roues motrices du véhicule automobile tant qu'il roule, ce qui permet d'éviter les risques de dérapage et de détérioration susmentionnés.

Suivant d'autres caractéristiques de l'invention:
- ledit dispositif comprend:
   - une roue de parking crantée,
   - un doigt de parking monté rotatif entre une position de parking où il bloque ladite roue et une position de conduite où il est écarté de cette roue,
   - des moyens élastiques pour rappeler ledit doigt de parking vers ladite position de conduite,
- et lesdits moyens d'interdiction sont adaptés pour empêcher ledit doigt de parking d'atteindre ladite position de parking tant que ledit véhicule automobile n'est pas arrêté,
- ledit dispositif comprend:
   - un levier de vitesses monté mobile entre une position de parking et une position de conduite,
   - une came montée rotative entre une position de parking où elle maintient ledit doigt de parking dans sa position de parking et une position de conduite où elle est écartée de ce doigt,
   - des moyens de liaison interposés entre ledit levier de vitesses et ladite came, ces moyens étant adaptés pour que la mise en position de parking ou de conduite dudit levier de vitesses entraîne respectivement la mise en position de parking ou de conduite de ladite came,
et lesdits moyens d'interdiction sont adaptés pour empêcher ladite came d'atteindre ladite position de parking tant que ledit véhicule automobile n'est pas arrêté,
- lesdits moyens d'interdiction comprennent:
   - une patte montée rotative entre une première position où elle est située à l'écart de la trajectoire de ladite came, et une deuxième position où elle interfère avec cette trajectoire, de manière respectivement à permettre ou à empêcher que ladite came n'atteigne sa position de parking sous l'action dudit levier de vitesses,
   - dès moyens élastiques pour rappeler ladite patte vers ladite deuxième position, et
   - des moyens pour amener ladite patte dans ladite première position uniquement lorsque ledit véhicule automobile est arrêté,
- lesdits moyens pour amener ladite patte dans ladite première position comprennent un actionneur du type permettant de verrouiller automatiquement une portière de véhicule automobile.

La présente invention porte également sur un véhicule automobile, remarquable en ce qu'il est équipé d'un dispositif de frein de parking suivant l'invention.

D'autres caractéristiques et avantages de la présente invention apparaîtront à la lecture de la description qui va suivre et à l'examen du dessin annexé, dans lequel:
- la figure 1 est une vue schématique du dispositif de frein de parking selon l'invention lorsqu'il se trouve en position dite « de conduite »,
- la figure 2 est une vue analogue à la figure 1, montrant comment on interdit la mise en position dite « de parking » du dispositif selon l'invention tant que certaines conditions ne sont pas remplies, et
- la figure 3 est une vue analogue aux précédentes, le dispositif selon l'invention se trouvant en position de parking.

Sur ces figures, des références identiques désignent des organes ou ensembles d'organes identiques ou analogues.

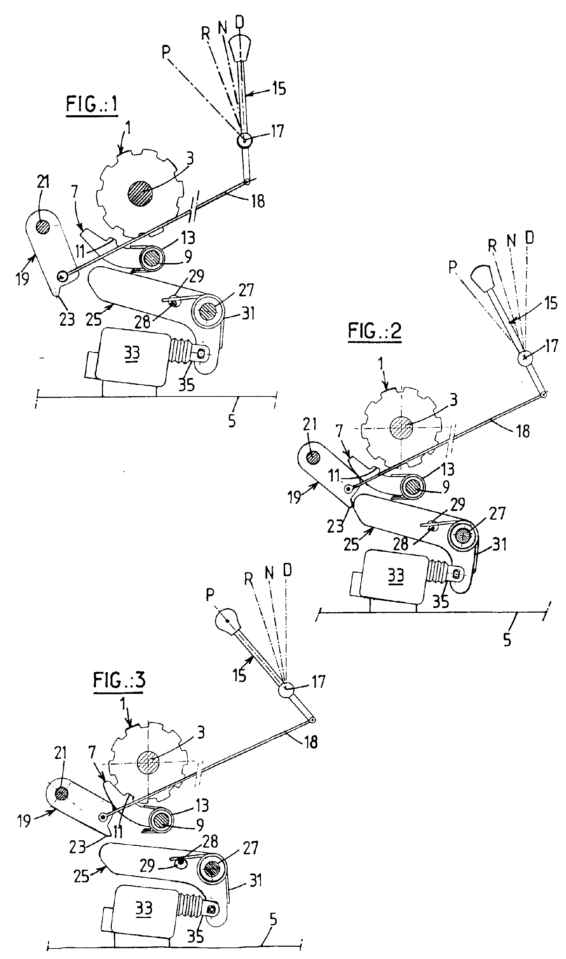

On se reporte à présent aux figures 1 à 3, sur lesquelles on voit que le dispositif selon l'invention comprend une roue de parking crantée 1, montée rotative autour d'un axe 3 et reliée mécaniquement aux roues motrices (non représentées) d'un véhicule automobile 5.

Un doigt de parking 7 monté rotatif autour d'un axe 9 est mobile entre une position dite « de parking » où il bloque la roue crantée 1 grâce à une dent 11 (voir figure 3), et une positon dite « de conduite » où il est écarté de cette roue (voir figures 1 et 2).

Des moyens élastiques tels qu'un ressort spiral 13 rappellent le doigt de parking 7 vers sa position de conduite.

Le dispositif selon l'invention comprend par ailleurs un levier de vitesses 15, destiné à actionner une boîte de vitesses automatique (non représentée), monté rotatif autour d'un axe 17 entre une position de parking P (voir figure 3) et une position de conduite D (voir figure 1).

De manière classique, ce levier de vitesses 15 peut également occuper une position de point mort N, et une position de marche arrière R.

Ce levier de vitesses 15 est relié par un organe tel qu'une tige 18 à une came 19 montée rotative autour d'un axe 21 entre une position de parking où elle maintient le doigt de parking 7 dans sa position de parking (voir figure 3), et une position de conduite où elle est écartée de ce doigt.

Cette came 19 comporte une extension 23 destinée à coopérer avec une patte 25. Cette patte, dont la forme peut être celle d'un L, est montée rotative autour d'un axe 27 entre une première position où elle est située à l'écart de la trajectoire de la came 19, et une deuxième position où elle interfère avec cette trajectoire.

La course de cette patte est limitée par un pion 28 coopérant avec une lumière 29 formée dans cette patte.

Des moyens élastiques tels qu'un ressort spiral 31 rappellent la patte 25 vers sa deuxième position.

Le dispositif selon l'invention comprend également des moyens pour amener la patte 25 dans sa première position.

Ces moyens peuvent comprendre un actionneur à électro-aimant 33 du type permettant de verrouiller automatiquement une portière de véhicule automobile.

Un tel actionneur comprend un bras 35 susceptible de s'allonger-sous l'effet de la mise sous tension d'un électro-aimant (non représenté), et ainsi d'entraîner la rotation de la patte 25 autour de son axe 27 de manière qu'elle atteigne sa première position.

Le fonctionnement et les avantages du dispositif de frein de parking selon l'invention découlent directement de la description qui précède.

Lorsque le véhicule automobile 5 roule (voir figures 1 et 2), l'actionneur 33 est inactif, de sorte que la patte 25 est maintenue dans sa deuxième position par le ressort spiral 31.

Ainsi, cette patte interfère avec la trajectoire de la came 19, et plus précisément avec l'extension 23 de cette came, de sorte qu'il n'est pas possible d'amener cette came, et par conséquent le levier de vitesses 15, dans leur position de parking (voir figure 2).

Dès que le véhicule automobile 5 s'arrête, on sollicite l'actionneur 33 en envoyant un courant électrique dans l'électro-aimant qui le compose, ce qui a pour effet d'allonger le bras 35, et ainsi d'amener la patte 25 dans sa première position (voir figure 3).

Ainsi, cette patte s'écarte de la trajectoire de la came 19, permettant ainsi d'amener cette came et le levier de vitesses 15 dans leur position de parking, et ainsi de maintenir le doigt 7 dans sa position de parking, grâce à quoi on bloque la roue de parking 1 et les roues motrices (non représentées) du véhicule automobile 5.

Lorsque le véhicule automobile 5 se remet à rouler, on cesse de solliciter l'actionneur 33, et la patte 25 retourne dans sa deuxième position sous l'effet du ressort spiral 31, empêchant ainsi à nouveau d'utiliser le frein de parking (voir figures 1 et 2).

Comme on peut le comprendre à la lumière de ce qui précède, le dispositif de frein de parking selon l'invention comprend des moyens pour interdire son actionnement tant que le véhicule automobile n'est pas complètement arrêté.

Grâce à ce dispositif, on s'affranchit des risques de blocage intempestif des roues motrices de ce véhicule, et ainsi des risques de dérapage et de détérioration rencontrés dans la technique antérieure.

On notera par ailleurs que le fait d'utiliser un actionneur 33 du type permettant de verrouiller automatiquement une portière de véhicule automobile évite d'avoir à concevoir un actionneur sur mesure, et permet ainsi de réduire le coût de fabrication du dispositif selon l'invention.

Bien entendu, la présente invention n'est pas limitée au mode de réalisation décrit et représenté, fourni à titre d'exemple illustratif et non limitatif.

## Revendications

1. Dispositif de frein de parking pour véhicule automobile (5) équipé d'une boîte de vitesses automatique, caractérisé en ce qu'il comprend des moyens (25, 31, 33) pour interdire son actionnement tant que ledit véhicule automobile (5) n'est pas arrêté.

2. Dispositif selon la revendication 1, caractérisé en ce qu'il comprend:
- une roue de parking crantée (1),
- un doigt de parking (7) monté rotatif entre une position de parking où il bloque ladite roue (1) et une position de conduite où il est écarté de cette roue (1),
- des moyens élastiques (13) pour rappeler ledit doigt de parking (7) vers ladite position de conduite,
et en ce que lesdits moyens d'interdiction (25, 31, 33) sont adaptés pour empêcher ledit doigt de parking (7) d'atteindre ladite position de parking tant que ledit véhicule automobile (5) n'est pas arrêté.

3. Dispositif selon la revendication 2, caractérisé en ce qu'il comprend:
- un levier de vitesses (15) monté mobile entre une position de parking et une position de conduite,
- une came (19) montée rotative entre une position de parking où elle maintient ledit doigt de parking (7) dans sa position de parking et une position de conduite où elle est écartée de ce doigt (7),
- des moyens de liaison (18) interposés entre ledit levier de vitesses (15) et ladite came (19), ces moyens étant adaptés pour que la mise en position de parking ou de conduite dudit levier de vitesses (15) entraîne respectivement la mise en position de parking ou de conduite de ladite came (19),
et en ce que lesdits moyens d'interdiction (25, 31, 33) sont adaptés pour empêcher ladite came (19) d'atteindre ladite position de parking tant que ledit véhicule automobile (5) n'est pas arrêté.

4. Dispositif selon la revendication 3, caractérisé en ce que lesdits moyens d'interdiction (25, 31, 33) comprennent:
- une patte (25) montée rotative entre une première position où elle est située à l'écart de la trajectoire de ladite came (19), et une deuxième position où elle interfère avec cette trajectoire, de manière respectivement à permettre ou à empêcher que ladite came (19) n'atteigne sa position de parking sous l'action dudit levier de vitesses (15),
- des moyens élastiques (31) pour rappeler ladite patte (25) vers ladite deuxième position, et
- des moyens (33) pour amener ladite patte (25) dans ladite première position uniquement lorsque ledit véhicule automobile (5) est arrêté.

5. Dispositif selon la revendication 4, caractérisé en ce que lesdits moyens pour amener ladite patte (25) dans ladite première position comprennent un actionneur (33) du type permettant de verrouiller automatiquement une portière de véhicule automobile.

6. Véhicule automobile (5), caractérisé en ce qu'il est équipé d'un dispositif conforme à l'une quelconque des revendications précédentes.
